# FASCICULE DE BREVET EUROPEEN

(11) **EP 3 651 333 B1**
(45) Date de publication et mention de la délivrance du brevet: **24.03.2021**
(21) Numéro de dépôt: 19206916.9
(22) Date de dépôt: 04.11.2019
(51) Int. Cl.: H02M 3/325, H01F 27/28

(54) **SYSTÈME DE TRANSFERT D'UNE PUISSANCE ÉLECTRIQUE SANS CONTACT ET PROCÉDÉ ASSOCIÉ**
ÜBERTRAGUNGSSYSTEM EINER KONTAKTLOSEN ELEKTRISCHEN LEISTUNG, UND ENTSPRECHENDES VERFAHREN
CONTACTLESS SYSTEM FOR TRANSFERRING ELECTRIC POWER AND ASSOCIATED METHOD

(43) Date de publication de la demande: 13.05.2020
(73) Titulaire: RENAULT s.a.s., 92100 Boulogne-Billancourt (FR)
(72) Inventeur: CAILLEREZ, Antoine, 92310 SEVRES (FR); LOUDOT, Serge, 91190 VILLIERS LE BACLE (FR)

(56) Documents cités:
- US-A1- 2008 048 818
- US-A1- 2016 164 343
- SAKET MOHAMMAD ALI ET AL: "Common-Mode Noise Elimination in Planar Transformers for LLC Resonant Converters", 2018 IEEE ENERGY CONVERSION CONGRESS AND EXPOSITION (ECCE), IEEE, 23 septembre 2018 (2018-09-23), pages 6607-6612, XP033463512, DOI: 10.1109/ECCE.2018.8557441
- PAHLEVANINEZHAD MAJID ET AL: "An Improved Layout Strategy for Common-Mode EMI Suppression Applicable to High-Frequency Planar Transformers in High-Power DC/DC Converters Used for Electric Vehicles", IEEE TRANSACTIONS ON POWER ELECTRONICS, INSTITUTE OF ELECTRICAL AND ELECTRONICS ENGINEERS, USA, vol. 29, no. 3, 1 mars 2014 (2014-03-01), pages 1211-1228, XP011527260, ISSN: 0885-8993, DOI: 10.1109/TPEL.2013.2260176 [extrait le 2013-09-18]

## Description

La présente invention concerne les barrières d'isolement électrique pour véhicule automobile, notamment les barrières d'isolement électrique entre un réseau de haute tension et un réseau de basse tension d'un véhicule hybride ou électrique.

Elle concerne plus particulièrement un système de transfert d'une puissance électrique sans contact.

Les véhicules électriques et hybrides rechargeables peuvent avoir plusieurs barrières d'isolement, notamment entre le réseau de haute tension de la batterie de traction et le réseau conventionnel de 12V.

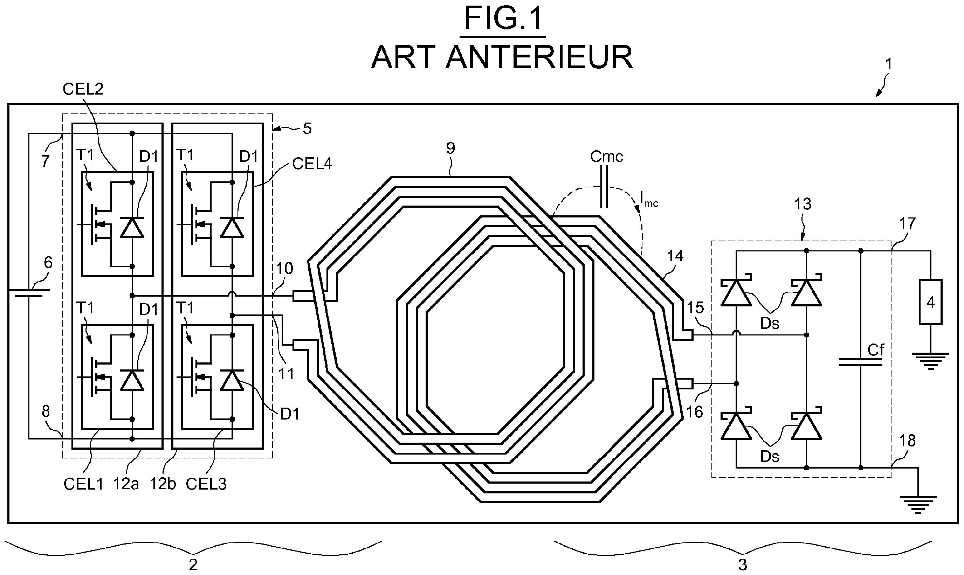

La figure 1 illustre une barrière d'isolement dans un véhicule 1 automobile hybride ou électrique comprenant un réseau de haute tension 2 et un réseau de basse tension 3 alimentant une charge 4.

Le réseau de haute tension 2 comprend un convertisseur 5 de puissance, par exemple un onduleur de tension et une batterie 6 de traction comprenant une borne positive reliée à une première entrée 7 du convertisseur 5. Une borne négative de la batterie 6 est reliée à une deuxième entrée 8 du convertisseur 5.

Le réseau de haute tension 2 comprend en outre une bobine primaire 9 reliée à deux sorties 10 et 11 du convertisseur 5.

Le convertisseur 5 comprend deux bras de commutation 12a et 12b comprenant chacun deux interrupteurs de commutation CEL1, CEL2, CEL3 et CEL4 identiques réalisées à partir de transistors T1 et de diodes D1.

Le réseau de basse tension 3 comprend un dispositif redresseur 13 de tension, une bobine secondaire 14 reliée à des entrées 15 et 16 du dispositif redresseur 13.

Le circuit redresseur 13 comprend en outre une première sortie 17 reliée à une première extrémité de la charge 4 et une deuxième sortie 18 reliée au châssis du véhicule 1.

Une deuxième extrémité de la charge 4 est reliée au châssis du véhicule 1.

Le dispositif redresseur 13 est réalisé à partir de diodes Ds et d'un condensateur Cf de filtrage.

La charge 4 est alimentée en basse tension continue, par exemple sous une tension continue de 12 volt.

Le convertisseur 5 réduit la tension reçue sur ses entrées 7 et 8 à la valeur de la tension d'alimentation de la charge 4.

Les bobines primaire et secondaire 9 et 14 sont superposées l'une sur l'autre pour former un coupleur magnétique (du type « coreless » en anglais).

En fonctionnement, les transistors T1 sont pilotés de sorte que le convertisseur 5 alimente la bobine primaire 9 par une tension alternative d'amplitude égale à la valeur de la tension continue.

Par induction, la bobine secondaire 14 fournit une tension alternative induite sur les entrées 15 et 16 du dispositif redresseur 13.

Le dispositif redresseur 13 redresse la tension induite reçue et alimente la charge 4 en tension continue.

Cependant, les bobines primaire et secondaire 9 et 14 forment une capacité parasite représentée par un condensateur parasite Cmc de mode commun.

La capacité du condensateur Cmc est suffisamment importante pour que les fronts de commutation des transistors T1 de commutation du convertisseur 5 produisent un courant Imc de fuite de mode commun du réseau de haute tension 2 vers le réseau basse de tension 3.

Le courant de fuite Imc perturbe le réseau basse de tension 3 dimensionné pour assurer une compatibilité de fonctionnement entre le convertisseur 5 et la charge 4.

De plus, le coupleur magnétique impose une distance réduite entre les bobines primaire et secondaire 9 et 14 pour favoriser le couplage magnétique diminuant la tension d'isolement.

Cependant, pour des applications de chargeur de véhicule automobile hybride ou électrique, l'immunité aux perturbations de mode commun du réseau électrique du dispositif 13 de redressement requiert un couplage de mode commun inférieur à celui obtenu par le coupleur magnétique.

En outre, l'utilisation de composants électroniques en carbure de silicium (SiC) ou nitrure de gallium (GaN)) génèrent des fronts de commutation raides générant des courants Imc de fuite importants quand de tels circuits redresseurs alimentent le circuit flottant de commande de leur grille.

Selon une solution technique connue, des composants de filtrage additionnels sont ajoutés.

Cependant, les composants additionnels occupent un volume supplémentaire dans le véhicule, complexifiant le circuit électronique du véhicule, diminuant la fiabilité du circuit et engendrant des coûts supplémentaires.

On pourra se référer au document US7,417,301 qui décrit un circuit comprenant un transformateur de type « coreless » intégré dans du silicium pour réduire l'encombrement du circuit.

Cependant, le circuit obtenu ne contribue pas à réduire la transmission de perturbations, ni à augmenter la tension d'isolement du transformateur.

Les documents US2007/0218595 et US2013/0278372 divulguent un circuit comprenant des bobines de type « coreless » agencées pour minimiser la sensibilité du circuit aux perturbations générées par des champs magnétiques extérieurs.

Cependant, le circuit obtenu ne contribue pas à réduire la transmission de perturbations de mode commun, ni à augmenter la tension d'isolement d'un transformateur comprenant les bobines.

Le document US2014/0070913 divulgue un transformateur de type « coreless » dont les bobines primaires et secondaires ont des géométries particulières

Cependant, les bobines primaire et secondaire sont l'une au-dessus de l'autre de sorte que le transformateur ne contribue pas à réduire la transmission de perturbations de mode commun, ni à augmenter sa tension d'isolement.

Les documents US2009/153285A1, US2015/162272A1, US2015/221583A1 et EP3116179A1 divulguent un circuit comprenant des bobines primaire et secondaire entrelacées de manière à augmenter le couplage magnétique entre les bobines et augmenter le mutisme magnétique.

Cependant, l'entrelacement des bobines engendre un couplage capacitif important entre les bobines primaire et secondaire générant des courants de fuite de mode commun.

Les circuits décrits dans ces documents ne permettent pas de diminuer la capacité parasite entre deux bobines situées l'une au-dessus de l'autre de manière à diminuer les courants de fuite de mode commun, ni d'augmenter la tension d'isolement entre les deux bobines.

Le but de l'invention est de pallier ces inconvénients.

Au vu de ce qui précède, l'invention propose un système de transfert d'une puissance électrique sans contact entre d'une part un circuit primaire comprenant un convertisseur de puissance destiné à être couplé à une source de tension continue et alimentant un circuit résonant primaire comprenant une bobine primaire, et, d'autre part, au moins un circuit secondaire comprenant un dispositif redresseur de tension destiné à être couplé à un réseau et relié à au moins un circuit résonant secondaire comprenant une bobine secondaire, ledit système étant apte à transférer le signal électrique par induction entre les deux bobines formant un coupleur magnétique.

Les circuits primaire et secondaire comportent des condensateurs reliés aux bobines primaire et secondaire de manière à résonner avec les impédances des bobines primaire et secondaire, les bobines primaire et secondaire étant situées dans un même plan.

La capacité parasite du couplage magnétique est réduite sans détérioration de la densité de puissance transmise par induction et l'immunité du système de transfert aux variations brutales d'un potentiel du circuit secondaire est augmentée.

Selon une caractéristique, le système comprend en outre des rubans magnétiques reliant les bobines primaire et secondaire.

De préférence, les bobines primaire et secondaire sont couplées par une poudre magnétique pour améliorer le couplage magnétique entre les bobines.

Avantageusement, le système comprend en outre une unité de traitement apte à piloter des cellules de commutation du convertisseur de puissance.

De préférence, le système comprend en outre un dispositif de mesure de la tension aux bornes de sortie du dispositif redresseur de tension.

L'invention a également pour objet un procédé de transfert d'une puissance électrique sans contact entre d'une part un circuit primaire comprenant un convertisseur de puissance comprenant des cellules de commutation comprenant chacune un transistor, le convertisseur de puissance étant couplé à une source de tension continue et alimentant un circuit résonant primaire, le circuit primaire résonant comprenant une bobine primaire et, d'autre part, au moins un condensateur relié à la bobine primaire de manière à résonner avec l'impédance de la bobine primaire, et au moins un circuit secondaire comprenant un dispositif redresseur de tension destiné à être couplé à un réseau et relié à au moins un circuit résonant secondaire comprenant une bobine secondaire et au moins un condensateur relié à la bobine secondaire de manière à résonner avec l'impédance de la bobine secondaire, les bobines primaire et secondaire étant situées dans un même plan.

On commute les transistors à tension nulle à une fréquence déterminée.

D'autres buts, caractéristiques et avantages de l'invention apparaîtront à la lecture de la description suivante, donnée uniquement à titre d'exemple non limitatif, et faite en référence aux dessins annexés sur lesquels :
- la figure 1, dont il a déjà été fait mention, illustre schématiquement un circuit de couplage entre deux circuits isolés d'un véhicule automobile hybride ou électrique selon l'état de la technique ;
- la figure 2 est une vue schématique d'un premier mode de réalisation d'un système de transfert d'une puissance électrique sans contact conforme à l'invention ;
- la figure 3 est une vue schématique d'un deuxième mode de réalisation d'un système de transfert d'une puissance électrique sans contact conforme à l'invention ;
- la figure 4 est une vue schématique d'un troisième mode de réalisation du coupleur magnétique conforme à l'invention ; et
- la figure 5 est une vue schématique d'un quatrième mode de réalisation du coupleur magnétique conforme à l'invention.

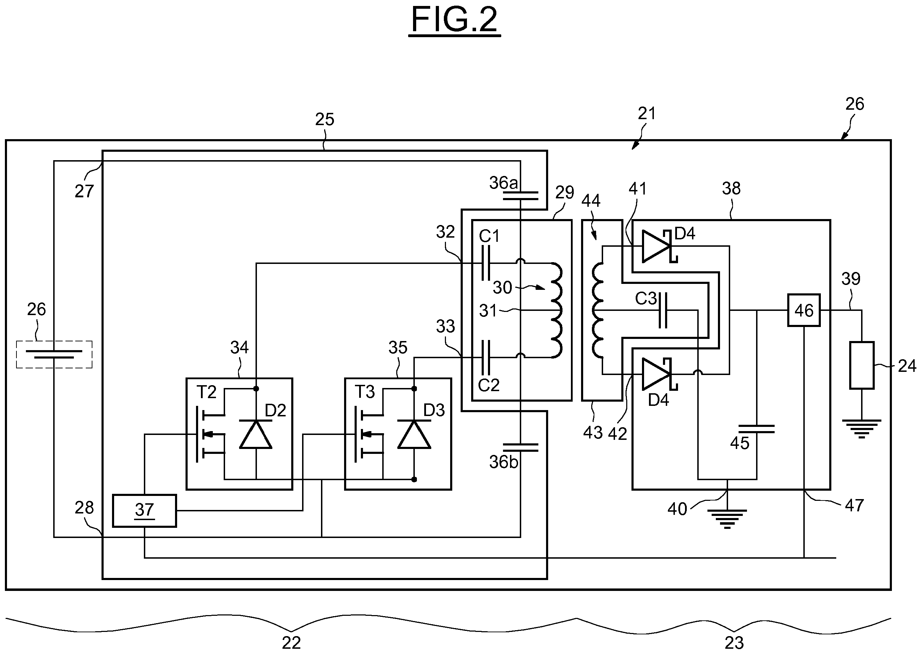

On se réfère à la figure 2 qui illustre un véhicule automobile hybride ou électrique comprenant un premier mode de réalisation d'un système de transfert 21 d'une puissance électrique sans contact entre un circuit primaire 22 et un circuit secondaire 23 alimentant une charge 24.

Bien entendu, le circuit secondaire 23 peut alimenter un réseau électrique.

Le circuit primaire 22 comprend un convertisseur 25 de puissance, une source de tension 26 continue comprenant une borne positive reliée à une première entrée 27 du convertisseur 25 et une borne négative reliée à une deuxième entrée 28 du convertisseur 25, et un circuit résonant primaire 29.

Le circuit résonant primaire 29 comprend une bobine primaire 30, un premier et un deuxième condensateur C1 et C2 de compensation identiques.

La bobine primaire 30 comprend une première extrémité reliée à une première extrémité du premier condensateur C1, une deuxième extrémité reliée à une première extrémité du deuxième condensateur C2 et un point milieu relié à une première sortie 31 du convertisseur 25.

La deuxième extrémité du premier condensateur C1 et la deuxième extrémité du deuxième condensateur C2 sont reliées à des deuxième et troisième sorties 32 et 33 du convertisseur 25.

Le convertisseur 25 comprend deux interrupteurs de commutation 34 et 35 identiques, deux condensateurs 36a et 36b identiques et une unité de traitement 37.

Chacun des interrupteurs 34 et 35 comprend un transistor, par exemple un transistor à effet de champ de type MOSFET. Cela étant, l'utilisation d'autres technologies de transistor est également possible, par exemple des transistors bipolaires, ou des transistors à haute mobilité d'électrons.

Chaque interrupteur 34 et 35 comprend en outre une diode dont l'anode est reliée à la source et la cathode est reliée au drain du transistor.

Selon un autre mode de réalisation, chaque interrupteur comporte un transistor MOSFET comprenant une diode montée en antiparallèle du transistor dont l'anode est reliée à la source et la cathode est reliée au drain du transistor connue par l'homme du métier sous l'appellation anglo-saxonne « body diode ».

Les deux interrupteurs 34 et 35 comprennent respectivement un transistor T2 et T3, et une diode D2 et D3 agencés comme décrit précédemment.

Le drain du transistor T2 est relié à la deuxième sortie 32 du convertisseur 25, la source du transistor T2 est reliée à la deuxième entrée 28 du convertisseur 25 et la grille du transistor T2 est reliée à l'unité de traitement 37.

Le drain du transistor T3 est relié à la troisième sortie 33 du convertisseur 25, la source du transistor T3 est reliée à la deuxième entrée 28 du convertisseur 25 et la grille du transistor T3 est reliée à l'unité de traitement 37.

Une première extrémité du premier condensateur 36a est reliée à la première entrée 27 du convertisseur 25 et une deuxième extrémité du premier condensateur 36a est reliée à la première sortie 31 du convertisseur 25.

Une première extrémité du deuxième condensateur 36b est reliée à la deuxième entrée 28 du convertisseur 25 et une deuxième extrémité du deuxième condensateur 36b est reliée à la première sortie 31 du convertisseur 25.

Le circuit secondaire 23 comprend un dispositif redresseur 38 de tension comprenant une première sortie 39 reliée à une première entrée de la charge 24, une deuxième sortie 40 reliée à une masse et deux entrées 41 et 42.

La masse est par exemple prise sur le châssis du véhicule 20, ou peut être flottante en suivant un potentiel fortement variable comme la grille d'un transistor de puissance.

Le circuit secondaire 23 comprend en outre un circuit résonant secondaire 43 comprenant une bobine secondaire 44.

Une première extrémité de la bobine secondaire 44 est reliée à la première entrée 41 du dispositif redresseur 38 et une deuxième extrémité de la bobine est reliée à la deuxième entrée 42 du dispositif redresseur 38.

La bobine secondaire 44 comprend en outre un point milieu situé entre ses deux extrémités.

Le circuit résonant secondaire 43 comprend en outre un troisième condensateur C3 de compensation.

Une première extrémité du troisième condensateur C3 est reliée au point milieu de la bobine secondaire 44 et une deuxième extrémité du troisième condensateur C3 est reliée à la masse.

Le dispositif redresseur 38 comprend deux diodes D4 pour redresser la tension de la bobine 44 et un condensateur 45 de filtrage.

Les diodes D4 de redressement sont par exemple des diodes à jonction PN ou Schottky.

L'anode des diodes D4 est reliée à une extrémité différente de la bobine secondaire 44 et la cathode des diodes D4 est reliée à une première extrémité du condensateur 45 de filtrage.

La première extrémité du condensateur 45 est reliée à la première sortie 39 du dispositif redresseur 38.

Une deuxième extrémité du condensateur 45 est reliée à la masse.

Le dispositif redresseur 38 comprend en outre un dispositif de mesure 46 de la tension pour mesurer la tension aux bornes de la charge 24.

Le dispositif de mesure 46 est relié à l'unité de traitement 37 par l'intermédiaire d'une deuxième sortie 47 du dispositif redresseur 38.

Le système 21 transfère d'une puissance électrique par induction entre les deux bobines primaire et secondaire 30 et 44 formant un premier mode de réalisation d'un coupleur magnétique.

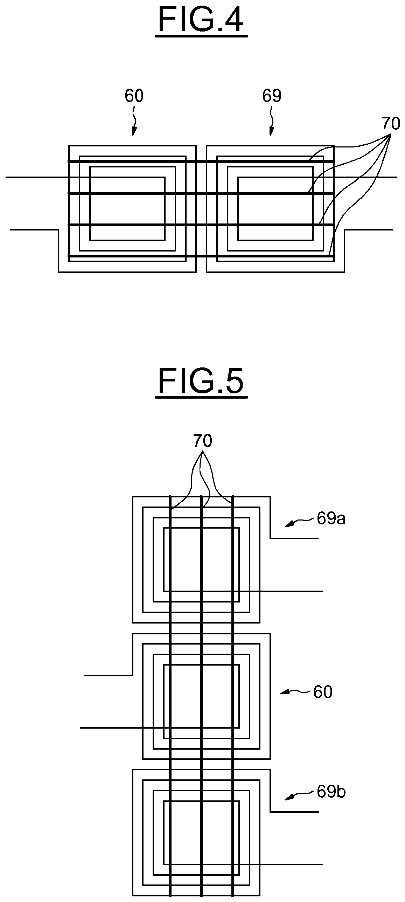

Les bobines primaire et secondaire 30 et 44 sont situées dans un même plan. Contrairement à l'art antérieur, chacune des bobines planes 30 et 44 ne se font pas face mais sont disposées l'une à côté de l'autre avec un entrefer les séparant (comme sur la figure 4).

La capacité parasite entre les bobines 30 et 44 est réduite et la tension d'isolement du coupleur magnétique est augmentée.

Par conséquent, le courant de fuite de mode commun est réduit.

De plus, le processus de fabrication des bobines primaires et secondaires 30 et 44 est simplifié.

L'unité de traitement 37 pilote les interrupteurs 34 et 35 du convertisseur 25.

L'unité de traitement 37 pilote les interrupteurs 34 et 35 à une fréquence de commutation variable de sorte que la tension relevée par le dispositif de mesure 46 soit égale à la tension nominale de la charge 24.

L'unité de traitement 37 peut mettre en œuvre un algorithme du type modulation de largeur d'impulsion.

En variante, l'unité de traitement 37 pilote les transistors T2 et T3 des interrupteurs 34 et 35 à une fréquence de commutation fixe, la valeur de la tension redressée aux bornes de la charge 24 étant dépendante du type de la charge 24.

L'unité de traitement 37 est réalisée par exemple à partir d'un calculateur automobile, mais il peut s'agir de tout dispositif embarqué permettant de piloter les transistors T2 et T3.

L'unité de traitement 37 peut piloter les transistors T2 et T3 à partir de mesures fournies par le dispositif de mesure 46.

Les premier et deuxième condensateurs C1 et C2 de compensation et le troisième condensateur C3 de compensation sont dimensionnés pour résonner à une fréquence déterminée avec l'impédance des bobines primaires et secondaires comprenant chacune une inductance magnétisante auquel ils sont raccordés.

Les condensateurs C1 à C3 permettent d'augmenter le rendement énergétique du transfert de puissance entre les circuits primaire et secondaire 22 et 23.

De plus, les circuits résonants primaire et secondaire 29 et 43 permettent d'obtenir des courants quasi-sinusoïdaux dans les bobines primaire et secondaire 30 et 44 de sorte que le spectre rayonné est plus restreint, et les transistors T2 et T3 du convertisseur 25 sont pilotés selon un mode de commutation de type commutation à tension nulle connue par l'homme du métier sous les termes anglo-saxons « Zéro Voltage Switching » ZVS ou commutation douce réduisant les pertes de commutation.

La fréquence déterminée est égale à la fréquence de commutation des transistors lorsque la fréquence de commutation est fixe.

Selon un autre mode de réalisation, un signal logique de commande est transféré par induction.

En variante, des signaux peuvent être transférés par modulation de plusieurs périodes de porteuse.

Dans ce qui suit, les éléments identiques portent les mêmes références.

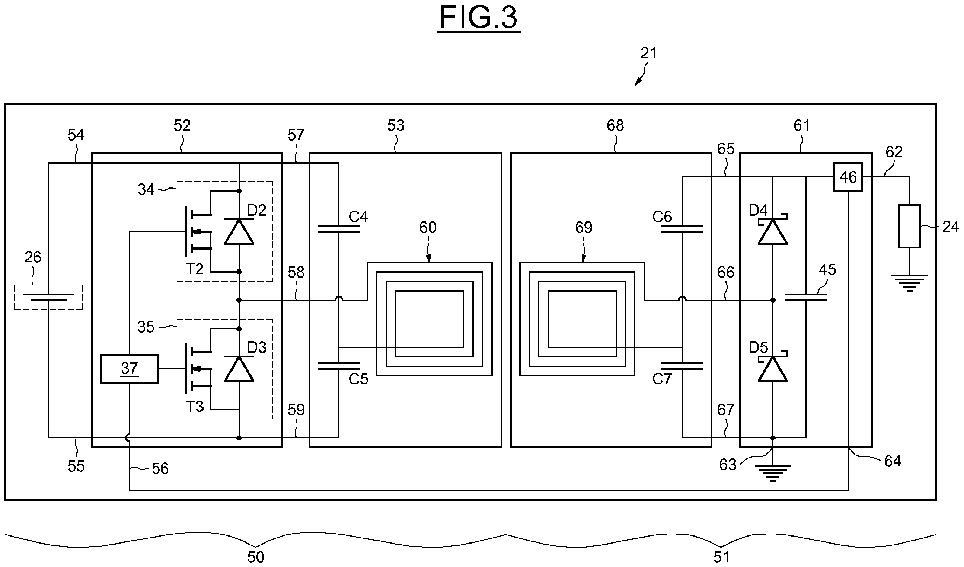

On se réfère à la figure 3 qui illustre un deuxième mode de réalisation du système de transfert 21 d'une puissance électrique sans contact entre un circuit primaire 50 et un circuit secondaire 51 alimentant la charge 24.

Le circuit primaire 50 comprend un convertisseur 52 de puissance, la source de tension 26 et un circuit résonant primaire 53.

Le convertisseur de puissance 52 comprend une première entrée 54 reliée à la borne positive de la source de tension, une deuxième entrée 55 reliée à la borne négative de la source de tension 26, une troisième entrée 56, et trois sorties 57, 58 et 59.

Le convertisseur 52 comprend en outre les deux interrupteurs 34 et 35 identiques pilotées par l'unité de traitement 37.

L'unité de traitement 37 est reliée à la troisième entrée 56.

Le drain du transistor T2 est relié à la première entrée 54 et à la première sortie 57 du convertisseur 52, la source du transistor T2 est reliée à la deuxième sortie 58 du convertisseur 52 et la grille du transistor T2 est reliée à l'unité de traitement 37.

Le drain du transistor T3 est relié à la deuxième sortie 58 du convertisseur 52, la source du transistor T3 est reliée à la deuxième entrée 55 et à la troisième sortie 59 du convertisseur 52, et la grille du transistor T3 est reliée à l'unité de traitement 37.

Le circuit résonant primaire 53 comprend une bobine primaire 60, un premier et un deuxième condensateur C4 et C5 de compensation identiques.

Une première extrémité du premier condensateur C4 est reliée à la première sortie 57 du convertisseur 52, et une deuxième extrémité du condensateur C4 est reliée à une première extrémité du deuxième condensateur C5 et à une première extrémité de la bobine primaire 60.

La deuxième extrémité du deuxième condensateur C5 est reliée à la troisième sortie 59 du convertisseur 52.

Une deuxième extrémité de la bobine primaire 60 est reliée à la deuxième sortie 58 du convertisseur 52.

Le circuit secondaire 51 comprend un dispositif redresseur 61 de tension comprenant une première sortie 62 reliée à une première entrée de la charge 24, une deuxième sortie 63 reliée à la masse, une troisième sortie 64 reliée à la troisième entrée 56 du convertisseur 52, et trois entrées 65, 66 et 67.

Le circuit secondaire 51 comprend en outre un circuit résonant secondaire 68 comprenant une bobine secondaire 69 et deux condensateur C6 et C7 de compensation.

La bobine 69 comprend une première extrémité reliée à une deuxième entrée 66 du dispositif redresseur 61, une deuxième extrémité reliée à une première extrémité des condensateurs C6 et C7 de compensation.

Les deuxième extrémités des condensateurs C6 et C7 sont respectivement reliées à des première 65 et troisième 67 entrées du dispositif redresseur 61.

Le dispositif redresseur 61 comprend la diode D4 et une diode D5 identiques pour écrêter des surtensions et le condensateur 45 de filtrage.

L'anode d'une première diode D4 et la cathode d'une deuxième diode D5 sont reliées à la deuxième entrée 66 du dispositif redresseur 61.

La cathode de la première diode D4 est reliée à la première extrémité du condensateur 45, et à la première 65 entrée et à la première sortie 62 du dispositif redresseur 61.

L'anode de la deuxième diode D5 est reliée à la deuxième extrémité du condensateur 45, et à la troisième entrée 67 et à la deuxième sortie 63 du dispositif redresseur 61.

Le dispositif redresseur 61 comprend en outre le dispositif de mesure 46 mesurant la tension aux bornes de la charge 24 et transmettant les résultats de mesure à l'unité de traitement 37 par l'intermédiaire de la troisième sortie 64 du dispositif redresseur 61.

Les bobines primaire 60 et secondaire 69 forment un deuxième mode de réalisation du coupleur magnétique.

Les condensateurs C4, C5, C6 et C7 sont dimensionnés de la même façon que les condensateurs C1, C2 et C3 de compensation.

Les condensateurs de compensation compensent la puissance réactive des bobines primaire et secondaire.

Afin d'améliorer le couplage magnétique entre les bobines primaire 60 et secondaire 69, selon un troisième mode de réalisation du coupleur magnétique représenté à la figure 4, des rubans 70 de matériau magnétique relient les bobines primaire 60 et secondaire 69.

Les rubans 70 sont réalisés par exemple en un matériau amorphe type permaloy ou nanocristallin.

L'augmentation de couplage magnétique permet de limiter la taille et la tension aux bornes des condensateurs de compensation.

Les rubans magnétiques 70 peuvent être connectés à la borne négative de la source de tension 26, à la masse, ou à un autre potentiel de manière à polariser les courants les traversant pour qu'ils ne perturbent pas le circuit primaire.

En variante, les rubans 70 peuvent être flottants.

Selon d'autres modes de réalisation, les rubans 70 peuvent être remplacés par une poudre magnétique pour améliorer le couplage magnétique entre les bobines primaire et secondaire.

Bien sûr d'autres moyens d'amélioration du couplage magnétique sont utilisables pour limiter la taille et la tension aux bornes des condensateurs de compensation. En fonction de la taille des condensateurs et de la tension à leurs bornes ces moyens ne sont donc pas nécessaires.

La figure 5 illustre un quatrième mode de réalisation du coupleur magnétique.

On retrouve la bobine primaire 60 et les rubans magnétiques 70.

Le coupleur magnétique comprend en outre deux bobines secondaires 69a et 69b disposées de part et d'autre de la bobine primaire 60 de sorte que les bobines 60, 69a et 69b sont situées dans un même plan.

Une capacité de compensation est associée à chaque bobine secondaire 69a et 69b.

Chaque bobine secondaire 69a et 69b peut être reliée à un circuit secondaire différent.

Les rubans 70 relient les bobines magnétiquement.

En variante, le coupleur ne comprend pas de rubans 70.

Selon une autre variante, de la poudre magnétique sépare les bobines.

La capacité des condensateurs de compensation est déterminée selon la valeur de la fréquence de la porteuse et du couplage magnétique effectif entre les bobines.

Selon leur taille, les condensateurs peuvent être intégrés ou extérieurs aux circuits primaire et secondaire dans le cas d'un circuit spécifique à une application ou dans le cas d'un circuit monolithique.

Les bobines primaire et secondaire(s) peuvent être imprimées sur un substrat isolant quelconque, par exemple un circuit imprimé, par dépôt métallique sur oxyde de silicium, par dépôt métallique sur céramique.

Plus la fréquence déterminée est élevée, plus les bobines primaire et secondaire et les capacités des condensateurs de compensation sont petites et la densité de puissance est élevée.

De préférence, la fréquence déterminée est située dans un intervalle compris entre 1MHz et 10 MHz pour obtenir un bon compromis entre l'encombrement du système et la puissance transférée.

Le système de transfert 21 d'une puissance électrique permet de transférer de la puissance électrique avec un faible couplage capacitif parasite sans détériorer la densité de puissance transférée.

De plus, l'immunité du système de transfert 21 aux variations brutales d'un potentiel du circuit secondaire est augmentée.

Le système de transfert 21 est adapté pour alimenter par exemple des charges flottantes dont un potentiel fortement variable comme par exemple la grille d'un transistor « grand gap » en commutation.

## Revendications

1. Système (21) de transfert d'une puissance électrique sans contact entre d'une part un circuit primaire (22, 50) comprenant un convertisseur de puissance (25, 52) destiné à être couplé à une source de tension continue (26) et alimentant un circuit résonant primaire (29, 53) comprenant une bobine primaire (30, 60) plane, et, d'autre part, au moins un circuit secondaire (23, 51) comprenant un dispositif redresseur de tension (38, 61) destiné à être couplé à un réseau électrique et relié à au moins un circuit résonant secondaire (43, 68) comprenant une bobine secondaire (44, 69) plane, ledit système étant apte à transférer le signal électrique par induction entre les deux bobines formant un coupleur magnétique, **caractérisé en ce que** les circuits primaire et secondaire comportent des condensateurs (C1, C2, C3, C4, C5, C6, C7) reliés aux bobines primaire et secondaire de manière à résonner avec les impédances des bobines primaire et secondaire, les bobines primaire et secondaire étant situées l'une à côté de l'autre dans un même plan et séparées par un entrefer, ledit système comportant des moyens d'amélioration du couplage magnétique entre lesdites bobines primaire et secondaire.

2. Système selon la revendication 1, dans lequel lesdits moyens d'amélioration du couplage magnétique sont des rubans magnétiques (70) reliant les bobines primaire (60) et secondaire (69).

3. Système selon la revendication 1, dans lequel les bobines primaire et secondaire sont couplées par une poudre magnétique pour améliorer le couplage magnétique entre les bobines.

4. Système selon l'une quelconque des revendications 1 à 3, comprenant en outre une unité de traitement (37) apte à piloter des cellules de commutation (34, 35) du convertisseur de puissance (25, 52).

5. Système selon la revendication 4, comprenant en outre un dispositif de mesure (46) de la tension aux bornes de sortie du dispositif redresseur de tension (38, 61).

6. Procédé de transfert d'une puissance électrique sans contact entre d'une part un circuit primaire (22, 50) comprenant un convertisseur de puissance (25, 52) comprenant des cellules de commutation (34, 35) comprenant chacune un transistor (T2, T3), le convertisseur de puissance étant couplé à une source de tension continue (26) et alimentant un circuit résonant primaire (29, 53), le circuit primaire résonant comprenant une bobine primaire (30, 60) plane et au moins un condensateur (C1, C2, C4, C5) relié à la bobine primaire de manière à résonner avec l'impédance de la bobine primaire, et, d'autre part, au moins un circuit secondaire (23, 51) comprenant un dispositif redresseur de tension (38, 61) destiné à être couplé à un réseau électrique et relié à au moins un circuit résonant secondaire (43, 68) comprenant une bobine secondaire (44, 69) plane et au moins un condensateur (C3, C6, C7) relié à la bobine secondaire de manière à résonner avec l'impédance de la bobine secondaire, les bobines primaire et secondaire étant situées l'une à côté de l'autre dans un même plan et séparées par un entrefer, des moyens d'amélioration du couplage magnétique étant compris entre lesdites bobines primaire et secondaire, **caractérisé en ce que** l'on commute les transistors à tension nulle à une fréquence déterminée.

## Patentansprüche

1. System (21) zur kontaktlosen Übertragung einer elektrischen Leistung zwischen einerseits einem Primärstromkreis (22, 50), der einen Stromrichter (25, 52) umfasst, der dazu bestimmt ist, mit einer Gleichspannungsquelle (26) gekoppelt zu werden, und einen primären Resonanzkreis (29, 53) speist, der eine flache Primärspule (30, 60) umfasst, und andererseits wenigstens einem Sekundärstromkreis (23, 51), der eine Spannungsgleichrichtervorrichtung (38, 61) umfasst, die dazu bestimmt ist, mit einem Stromnetz gekoppelt zu werden, und mit wenigstens einem sekundären Resonanzkreis (43, 68) verbunden ist, der eine flache Sekundärspule (44, 69) umfasst, wobei das System geeignet ist, das elektrische Signal durch Induktion zwischen den zwei Spulen zu übertragen, die einen Magnetkoppler bilden, **dadurch gekennzeichnet, dass** der Primär- und der Sekundärstromkreis Kondensatoren (C1, C2, C3, C4, C5, C6, C7) aufweisen, die mit der Primär- und der Sekundärspule so verbunden sind, dass sie mit den Impedanzen der Primär- und der Sekundärspule in Resonanz treten, wobei sich die Primär- und die Sekundärspule nebeneinander in derselben Ebene befinden und durch einen Luftspalt getrennt sind, wobei das System Mittel zur Verbesserung der magnetischen Kopplung zwischen der Primär- und der Sekundärspule aufweist.

2. System nach Anspruch 1, wobei die Mittel zur Verbesserung der magnetischen Kopplung Magnetbänder (70) sind, welche die Primär- (60) und die Sekundärspule (69) verbinden.

3. System nach Anspruch 1, wobei die Primär- und die Sekundärspule durch ein magnetisches Pulver gekoppelt sind, um die magnetische Kopplung zwischen den Spulen zu verbessern.

4. System nach einem der Ansprüche 1 bis 3, welches außerdem eine Verarbeitungseinheit (37) umfasst, die geeignet ist, Schaltzellen (34, 35) des Stromrichters (25, 52) zu steuern.

5. System nach Anspruch 4, welches außerdem eine Vorrichtung zur Messung (46) der Spannung an den Ausgangsklemmen der Spannungsgleichrichtervorrichtung (38, 61) umfasst.

6. Verfahren zur kontaktlosen Übertragung einer elektrischen Leistung zwischen einerseits einem Primärstromkreis (22, 50), der einen Stromrichter (25, 52) umfasst, welcher Schaltzellen (34, 35) umfasst, die jeweils einen Transistor (T2, T3) umfassen, wobei der Stromrichter mit einer Gleichspannungsquelle (26) gekoppelt ist und einen primären Resonanzkreis (29, 53) speist, wobei der primäre Resonanzkreis eine flache Primärspule (30, 60) und wenigstens einen Kondensator (C1, C2, C4, C5) umfasst, der mit der Primärspule so verbunden ist, dass er mit der Impedanz der Primärspule in Resonanz tritt, und andererseits wenigstens einem Sekundärstromkreis (23, 51), der eine Spannungsgleichrichtervorrichtung (38, 61) umfasst, die dazu bestimmt ist, mit einem Stromnetz gekoppelt zu werden, und mit wenigstens einem sekundären Resonanzkreis (43, 68) verbunden ist, der eine flache Sekundärspule (44, 69) und wenigstens einen Kondensator (C3, C6, C7) umfasst, der mit der Sekundärspule so verbunden ist, dass er mit der Impedanz der Sekundärspule in Resonanz tritt, wobei sich die Primär- und die Sekundärspule nebeneinander in derselben Ebene befinden und durch einen Luftspalt getrennt sind, wobei Mittel zur Verbesserung der magnetischen Kopplung zwischen der Primär- und der Sekundärspule vorhanden sind, **dadurch gekennzeichnet, dass** die Transistoren mittels Nullspannungsschaltung mit einer bestimmten Frequenz geschaltet werden.

## Claims

1. System (21) for the contactless transfer of electrical power between on the one hand a primary circuit (22, 50) comprising a power converter (25, 52) intended to be coupled to a DC voltage source (26) and powering a primary resonant circuit (29, 53) comprising a planar primary coil (30, 60) and, on the other hand, at least one secondary circuit (23, 51) comprising a voltage-rectifying device (38, 61) intended to be coupled to an electrical network and connected to at least one secondary resonant circuit (43, 68) comprising a planar secondary coil (44, 69), said system being able to transfer the electrical signal by induction between the two coils forming a magnetic coupler, **characterized in that** the primary and secondary circuits include capacitors (C1, C2, C3, C4, C5, C6, C7) connected to the primary and secondary coils so as to resonate with the impedances of the primary and secondary coils, the primary and secondary coils being positioned next to each other in one and the same plane and separated by an airgap, said system including means for improving the magnetic coupling between said primary and secondary coils.

2. System according to Claim 1, wherein said means for improving the magnetic coupling are magnetic strips (70) connecting the primary (60) and secondary (69) coils.

3. System according to Claim 1, wherein the primary and secondary coils are coupled by a magnetic powder to improve the magnetic coupling between the coils.

4. System according to any one of Claims 1 to 3, furthermore comprising a processing unit (37) able to control switching cells (34, 35) of the power converter (25, 52) .

5. System according to Claim 4, furthermore comprising a device (46) for measuring the voltage across the output terminals of the voltage-rectifying device (38, 61).

6. Method for the contactless transfer of electrical power between on the one hand a primary circuit (22, 50) comprising a power converter (25, 52) comprising switching cells (34, 35) each comprising a transistor (T2, T3), the power converter being coupled to a DC voltage source (26) and powering a primary resonant circuit (29, 53), the resonant primary circuit comprising a planar primary coil (30, 60) and at least one capacitor (C1, C2, C4, C5) connected to the primary coil so as to resonate with the impedance of the primary coil and, on the other hand, at least one secondary circuit (23, 51) comprising a voltage-rectifying device (38, 61) intended to be coupled to an electrical network and connected to at least one secondary resonant circuit (43, 68) comprising a planar secondary coil (44, 69) and at least one capacitor (C3, C6, C7) connected to the secondary coil so as to resonate with the impedance of the secondary coil, the primary and secondary coils being positioned next to each other in one and the same plane and separated by an airgap, means for improving the magnetic coupling being contained between said primary and secondary coils, **characterized in that** the transistors are switched at zero voltage at a defined frequency.
